# EUROPEAN PATENT SPECIFICATION

(11) **EP 1 637 276 B1**
(45) Date of publication and mention of the grant of the patent: **01.10.2014**
(21) Application number: 04746402.9
(22) Date of filing: 18.06.2004
(51) Int. Cl.: B23P 19/02, B25B 27/20, B21D 39/04

(54) **RING COMPRESSION DEVICE AND METHOD**
RINGKOMPRESSIONSVORRICHTUNG UND -VERFAHREN
DISPOSITIF ET PROCEDE DE COMPRESSION D'ANNEAU

(30) Priority: 20.06.2003 JP 2003177019
(43) Date of publication of application: 22.03.2006
(73) Proprietor: NHK Spring Co., Ltd., Yokohama-shi, Kanagawa 236-0004 (JP)
(72) Inventor: SUZUKI, Hitoshi Nhk Spring Co., Ltd., Aikou-gun Kanagawa 2430303 (JP); OGINO, Takashi, Nagano 3994117 (JP); MIURA, Takashi, Nagano 3994117 (JP)
(74) Representative: HOFFMANN EITLE
(86) International application number: PCT/JP2004/008933
(87) International publication number: WO 2004/113018

(56) References cited:
- JP-A- 3 238 124
- JP-A- 51 109 516
- JP-A- 60 245 897
- JP-B2- 57 055 495
- JP-U- 51 139 427
- JP-U- 60 113 134
- JP-Y1- 45 007 817
- US-A- 4 578 982
- US-A- 5 715 723
- US-A- 5 890 270

## Description

### TECHNICAL FIELD

The present invention relates to a ring compression device and a ring compression method that applies force on the periphery of a ring to compress the ring and mount the ring on a mounting body located inside a bore of the ring.

### BACKGROUND ART

A ring compression device has been known in the art that is used to mount a ring onto a mounting body. The ring compression device applies force on the periphery of the ring to compress the ring and mount it onto the mounting body that is inserted inside the ring. In one conventional ring compression device, two slide members that are arranged symmetrical to each other are allowed to perform only circular movements inside an housing. Four segments that are symmetrical to each other are connected to non-concentric inner surfaces of each of the slide members. Each segment has a clamping surface that is equidistant from a center, and can move toward or away from center in the radial direction. When compressing a ring, a ring is placed inside the segments and the slide members are caused to mutually approach each other. As a result, the segments move toward the center and the radius of a circle formed by the clamping surface of each segment becomes smaller, so that force is applied on the periphery of the ring and the ring is compressed (Refer to, for instance, Japanese Patent Laid-Open Publication No. H10-575)..

In another ring compression conventional device, two cams can be moved within corresponding slits by operating corresponding guide block. With movements of the two cams, two semicircular sections of a pressing machine separated from each other move in the circumferential direction, which moves the cams inside the slits. Moreover, with the movements of the cams, a press jaw is driven inward in the radial direction. A ring is placed inside the press jaw. The ring is uniformly pressed by, for example, a rubber bellow, and the bellow is fixed and jointed, for instance, to a drive shaft (Refer to, for instance, Japanese Patent Publication No. 2002-504436).

In the one conventional ring compression device, due to movement of two slide members toward each other, the segments move inward in the radial direction, and a ring placed in an inner side from the segments is compressed with a force. However, there can be an assembly error between the two slide members. When there is an assembly error, the segments do not move uniformly, and it can be difficult to apply a uniform force onto the ring.

In the another conventional ring compression device, there can be dimensional error or assembly error in any of the two semicircular sections. When there is dimensional error or assembly error, the press jaws do not move uniformly, and it can be difficult to apply uniform force to the compression ring.

Furthermore, before a ring is compressed, there are clearances between the segments or the press jaws and the ring, and between the ring and the mounting body. The clearance is required to insert the ring inside the segments or the press jaws and insert the mounting body in the ring. In each of the conventional devices, however, there is no mechanism that can hold and position the ring inside the segments or the press jaws so that the ring does not touch the segments or the press jaws, or hold and position the mounting body in the ring so that the mounting body does not touch the ring. As a result, a non-uniform force is applied to the ring, which may compress the ring in a manner that is not intended. Furthermore, a non-uniform force is applied at the center of the mounting body, which may causes the ring to fix in a manner that is not intended.

In the light of the above circumstances, an object of the present invention is to provide a ring compression device and a ring compression method that can apply a uniform force onto the ring and also facilitate positioning of the ring and the mounting body.

A ring compression device having the features defined in the preamble of claim 1 is known from US-A-5,715,723 or US-A-4,578,982.

### DISCLOSURE OF INVENTION

According to an aspect of the present invention, a ring compression device for applying force to a ring to fix the ring on a mounting body includes the features of claim 1.

With the above aspect, tips of the pressing members are integrally moved by the rotational body toward the central axis. Namely, a delivery system for delivering motions to the pressing members from the rotating body is one system, so that the pressing members uniformly move and apply a uniform force to the ring.

According to another aspect of the ring compression device, in an initial state, a tip of a specific pressing member is aligned to a reference circle of the central axis constituting an external periphery of the ring, and tips of the other pressing members are provided in a position deviating to the outer side of the reference circle; and the driven unit aligns, when making each of the pressing members move forward the tips of all pressing members to the reference circle, thereby making the tips of all pressing members move together.

With the above aspect, when a ring inserted into a reference circle in the initial state of the device is deformed from a perfect circle, a tip of the pressing member at a position deviated to the outer side from the reference circle accommodates deformation of the ring for allowing for insertion of the ring. Furthermore, when the pressing members are moved forward, positions of tips of all pressing members are aligned to the reference circuit and then the tips of all the pressing members are moved integrally, so that deformation of the ring is corrected to a perfect circle based on the reference circle.

According to the present invention, the ring compression device further includes a hooking unit for hooking the ring, the hooking unit having a claw member abutting on an edge face on one side of the ring on the side of the substrate and also having a movable claw member abutting on an edge face on the other side of the ring on the tip side of the specific pressing member.

With the above aspect, when a ring inserted into a reference circle in the initial state of the device is deformed from a perfect circle, a tip of the pressing member at a position deviated to the outer side from the reference circle accommodates deformation of the ring for allowing for insertion of the ring. Furthermore, when the pressing members are moved forward, positions of tips of all pressing members are aligned to the reference circle and then the tips of all pressing members are moved integrally, so that deformation of the ring is corrected to a perfect circle based on the reference circle. In addition, the ring can accurately be held at the positions of tips of the pressing members. Even when the ring is deformed, a tip of the pressing member at a position deviated to the outer side from the reference circuit accommodates deformation of the ring, so that the ring can easily be inserted and hooked therein.

According to still another aspect of the present invention, the ring compression device further includes a holding unit for aligning and holding the mounting body in relation to the central axis.

With the above aspect, a mounting body is held on a central shaft of the substrate with the holding unit, so that the mounting body can easily be aligned for positioning to a position where the ring is to be fixed.

According to still another aspect of the present invention, a ring compression method as defined in claim 3 is suggested.

With the above aspect, before a ring is set to a mounting body, a clearance between the ring and the mounting body is accommodated, so that the ring and the mounting body can easily be positioned to each other. As a result, force to the ring is stabilized, and force to a center of the mounting body is stabilized, so that the ring can favorably be set to the mounting body.

With the above aspect, before a ring is hooked, when the ring to be inserted into a reference circle is deformed from a perfect circle, a tip of the pressing member at a position deviated to the outer side from the reference circle accommodate deformation of the ring, so that insertion of the ring is possible. Furthermore, when the tips are moved forward, positions of all the tips are aligned to the reference circle, so that deformation of the ring is corrected to a perfect circle based on the reference circle.

### BRIEF DESCRIPTION OF DRAWINGS

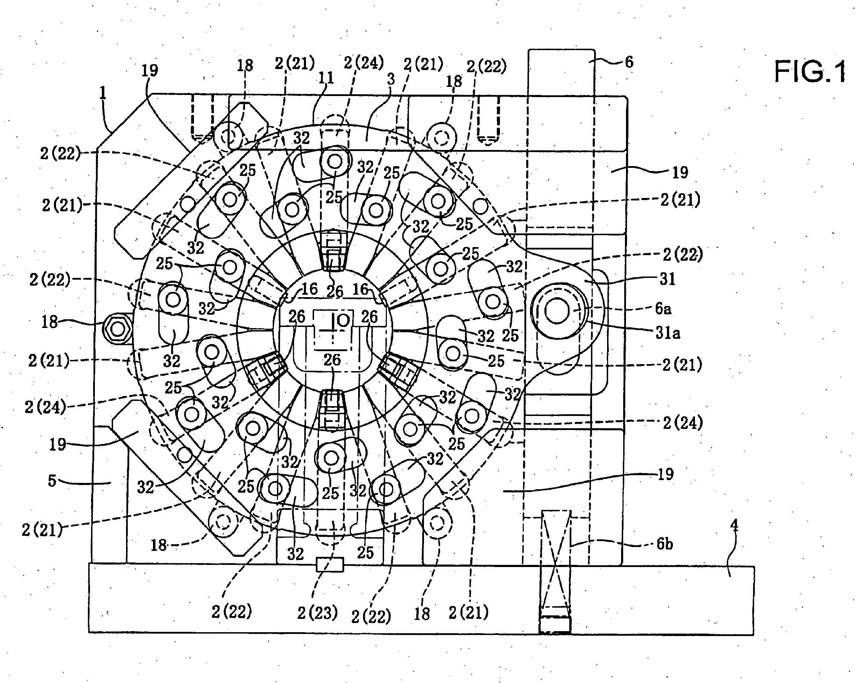

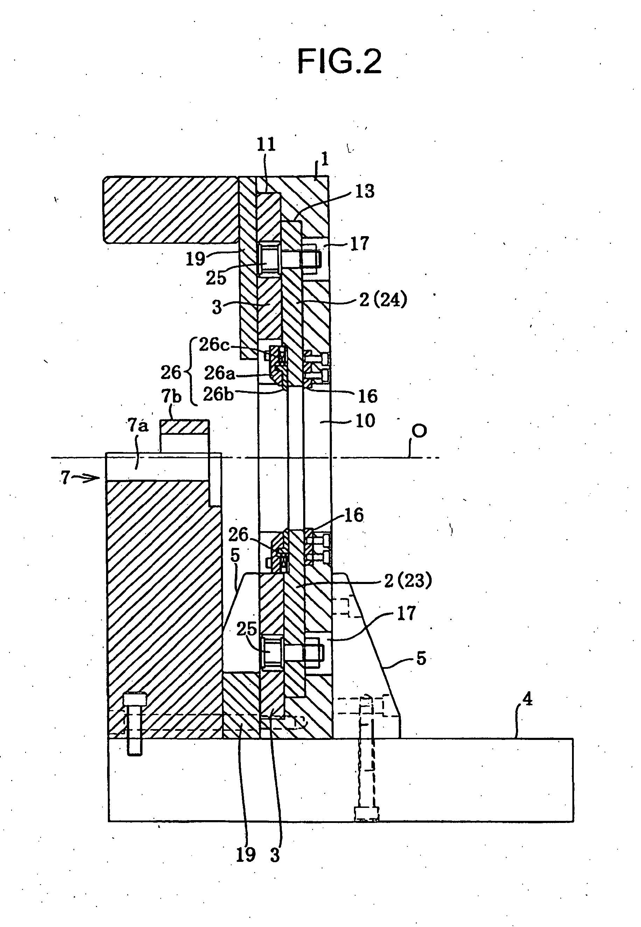

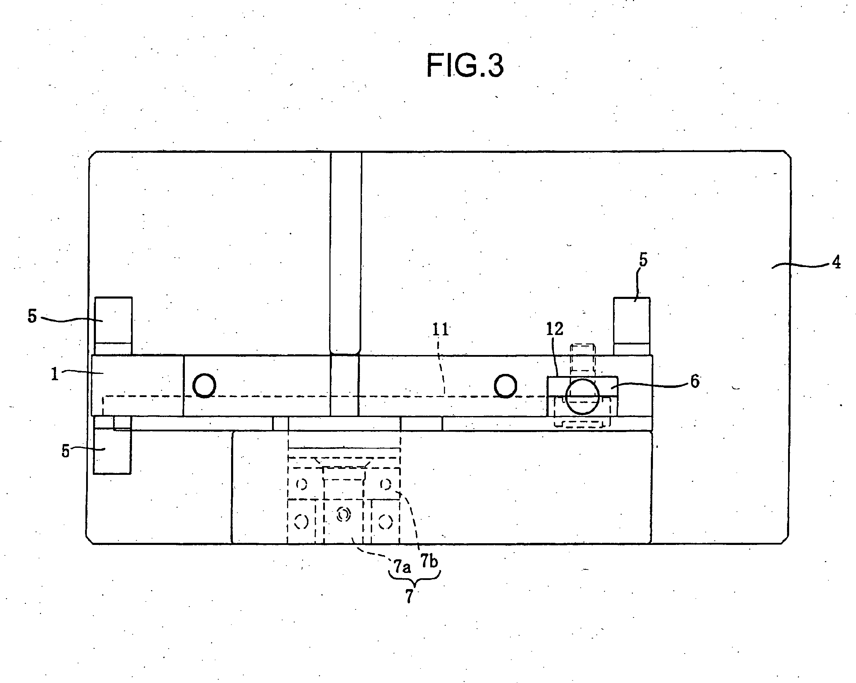

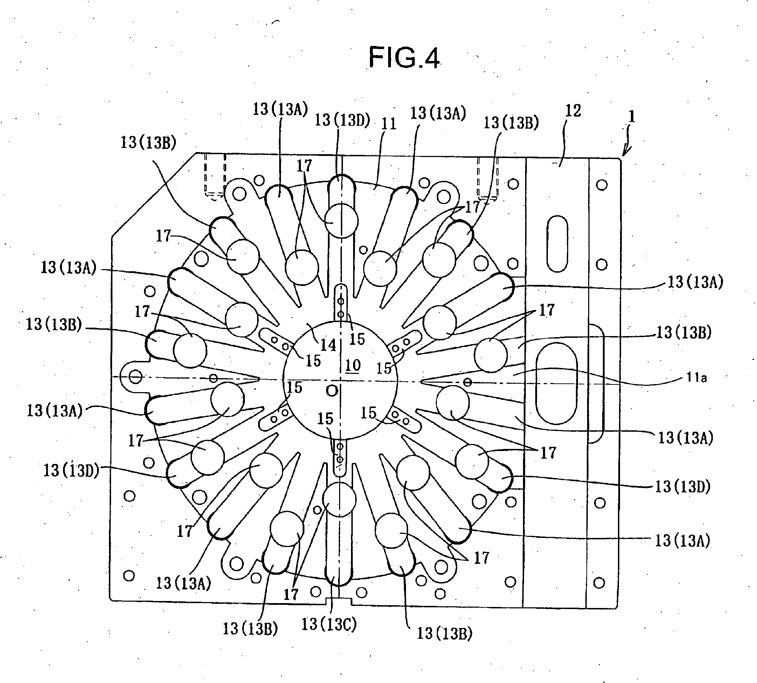

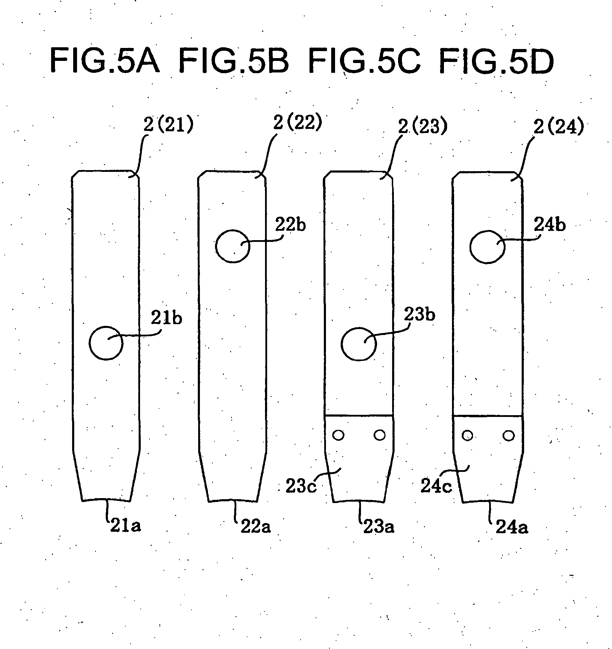

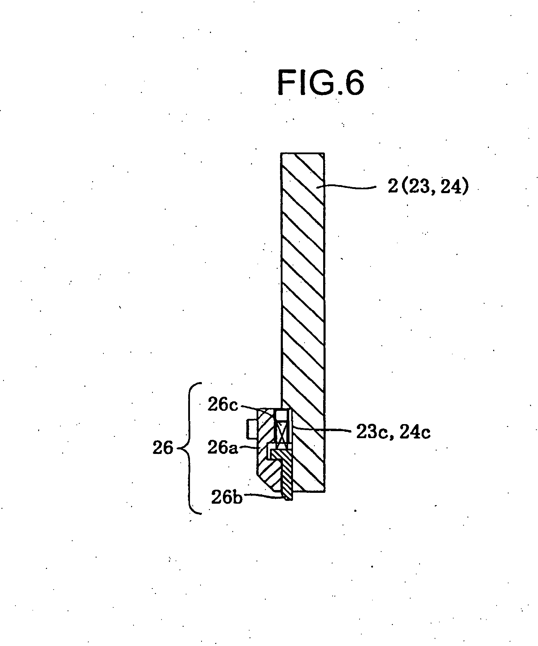

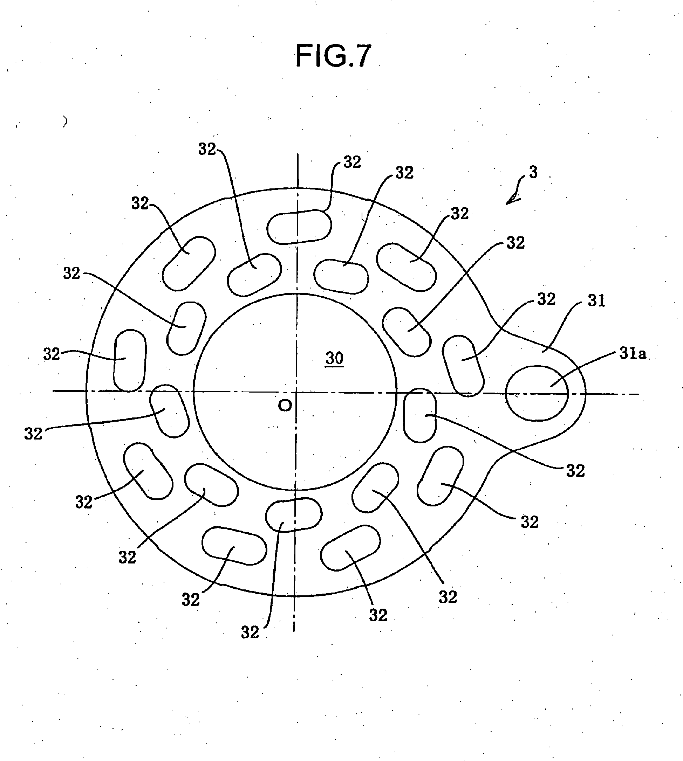

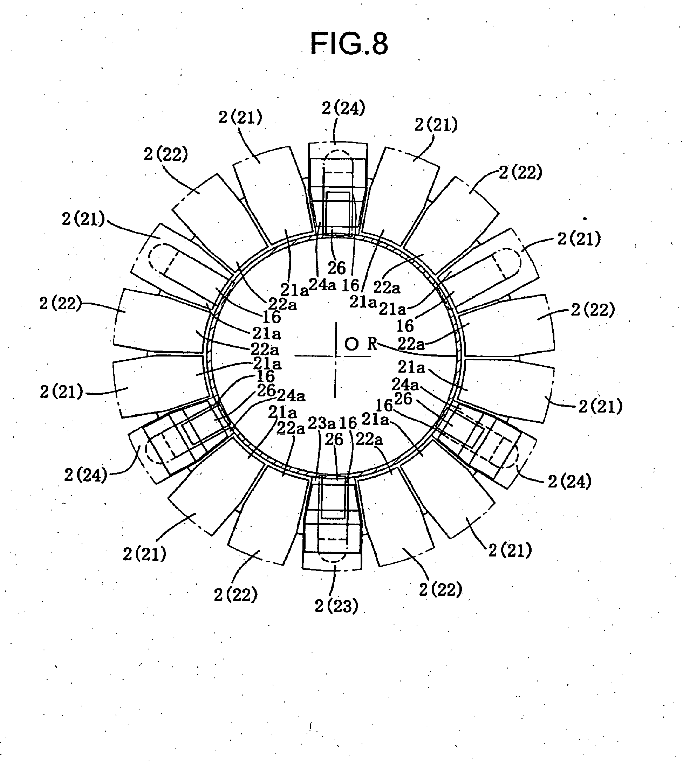

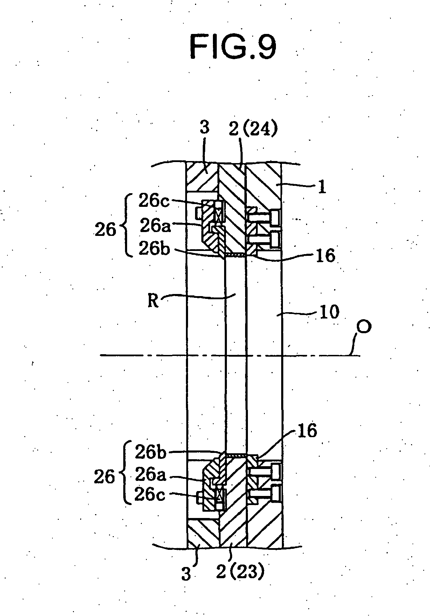

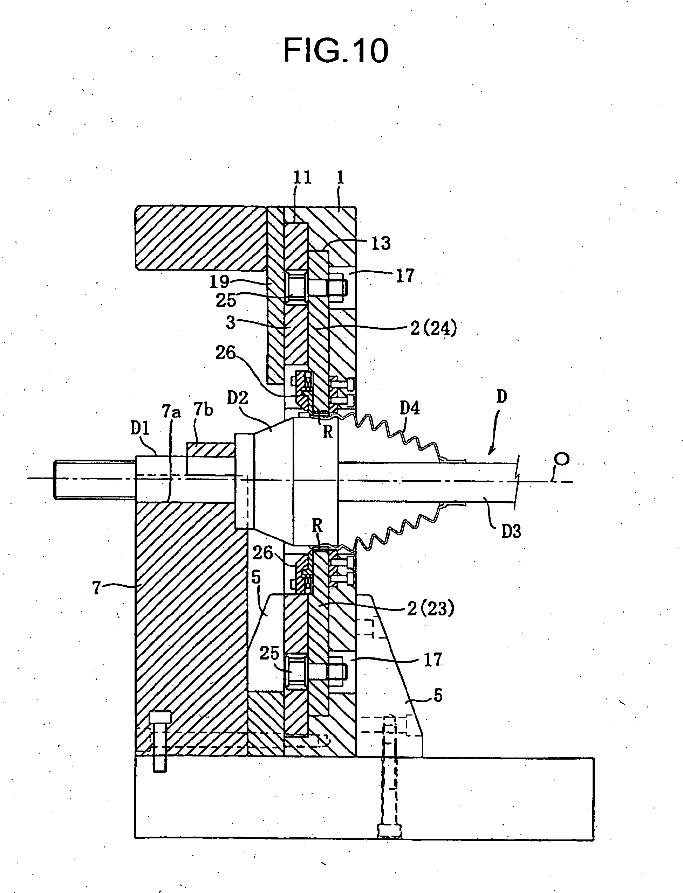

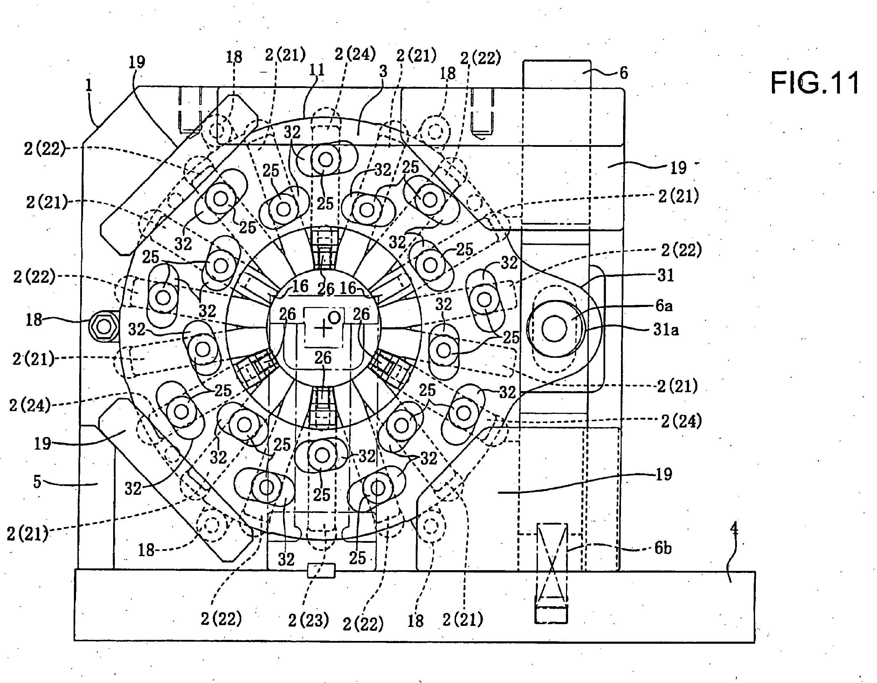

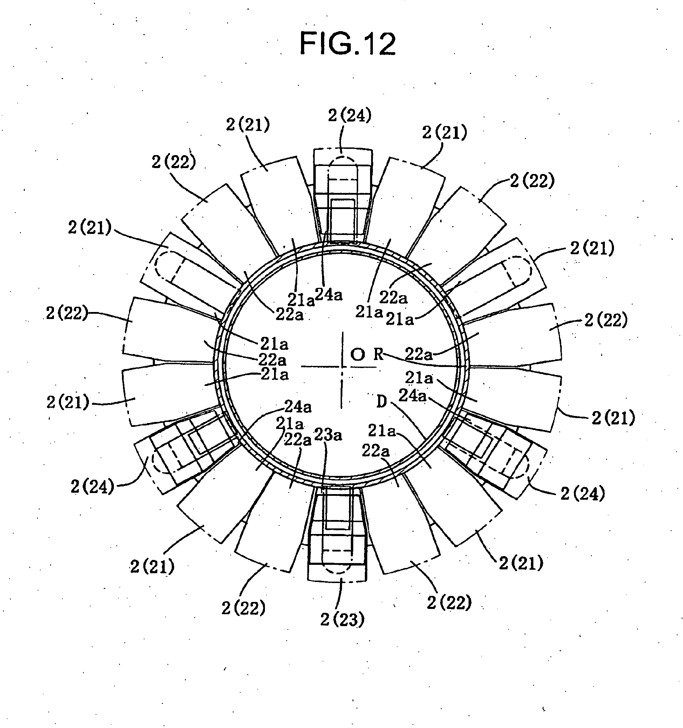

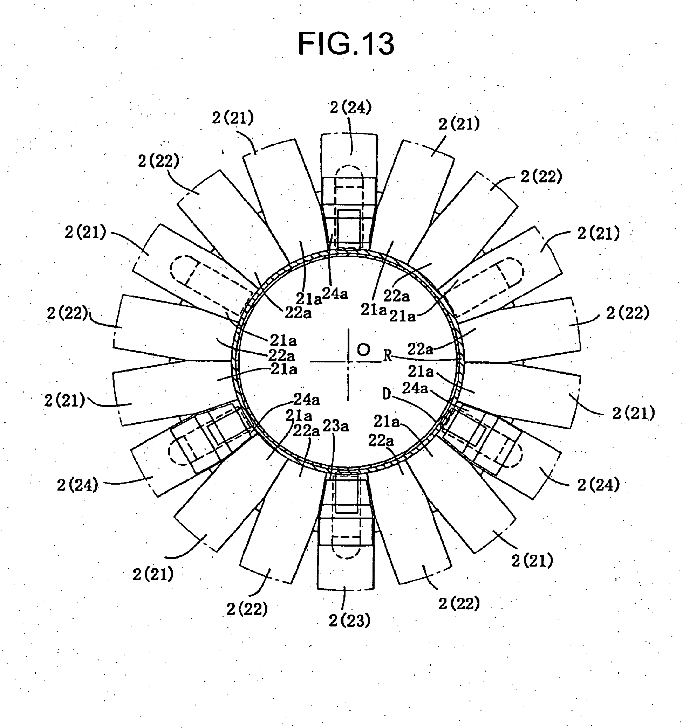

Fig. 1 is a front view of a ring compression device according to an embodiment of the present invention; Fig. 2 is a side cross-sectional view of the ring compression device; Fig. 3 is a side view of the ring compression device; Fig. 4 is a front view of a substrate of the ring compression device; Fig. 5A to Fig. 5D are front views of pressing members used in the ring compression device; Fig. 6 is a side view of a movable claw section; Fig. 7 is a front view of a rotational body of the ring compression device; Fig. 8 is a front view of an initial state in which a ring is set in the pressing members; Fig. 9 is a side cross-sectional view of a state in which the ring is mounted in the ring compression device; Fig. 10 is a side cross-sectional view of a state in which a mounting body is set inside the ring; Fig. 11 is a front view for explaining the operations of the ring compression device; Fig. 12 is a front view for explaining compression of the ring; and Fig. 13 is a front view for explaining compression of the ring.

### BEST MODE(S) FOR CARRYING OUT THE INVENTION

The present invention is explained in more detail with reference to the accompanying drawings.

Fig. 1 is a front view of a ring compression device according to an embodiment of the present invention; Fig. 2 is a side cross-sectional view of the ring compression device; Fig. 3 is a side view of the ring compression device; Fig. 4 is a front view of a substrate of the ring compression device; Fig. 5A to Fig. 5D are front views of pressing members used in the ring compression device; Fig. 6 is a side view of a movable claw section; and Fig. 7 is a front view of a rotational body of the ring compression device.

The ring compression device according to the present embodiment is used for mounting a ring R onto a mounting body D placed in the ring R. The ring R is mounted by applying force onto the periphery of the ring R thereby compressing the ring. The ring R is prepared by forming a sheet plate body made of metal material such as an aluminum alloy or a stainless steel alloy to a endless loop form. The mounting body D includes, for example, a constant velocity joint shown in Fig. 10. Constant velocity joints are used in vehicles. The constant velocity joint has the configuration in which a shaft D1 is integrated with a cup-shaped joint D2 and another shaft D3 is connected to the shaft D1 inside of the joint D2. A bellow-like cylindrical boot D4 covers an external periphery of the joint D2 and some portion of the shaft D3 to prevent grease filled in the joint D2 from leaking. The ring R is mounted on one end of the boot D4 so that the one end is clamped tightly onto the periphery of the joint D2.

As shown in Fig. 1 to Fig. 3, the ring compression device includes a substrate 1, a pressing member 2, and a rotational body 3 as main components. A rib 5 is fixed on a base plate 4. The rib 5 firmly holds the substrate 1. The pressing member 2 and the rotational body 3 are provided on the substrate 1.

As shown in Fig. 4, the substrate 1 has a central axis O extending along the thickness of the substrate 1. The substrate 1 has a circular insertion hole 10 around the central axis O and the insertion hole 10 extends from a front surface to a rear surface of the substrate 1. Furthermore, a circular accommodating concave section 11 is provided in the front side of the substrate 1 around the central axis O. The accommodating concave section 11 is larger in diameter than the insertion hole 10. Namely, the insertion hole 10 is located inside the accommodating concave section 11. A concave groove 12 that extends in the vertical direction is provided in the side section of the substrate 1 in the front side (right side in Fig. 4). A side section of the accommodating concave section 11 (right side in Fig. 4) communicates to the concave groove 12 via a communicating concave section 11a having the same depth as that of the accommodating concave section 11.

Bottom sections of the accommodating concave section 11 and the communicating concave section 11a are flat. Guide grooves 13 (13A, 13B, 13C, 13D) are provided on the bottom sections. The guide grooves 13 extend longitudinally in the radial direction from the central axis O, and in this embodiment, 18 equally-spaced grooves are provided around the central axis O. The bottom sections of each guide groove 13 is on the same plane. Furthermore, the guide grooves 13 merge with each other before the grooves reach the insertion hole 10, so that a continuous circular groove 14 is formed around the insertion hole 10.

Fixed concave sections 15 are provided in the circular groove 14. Each fixed concave section 15 extends into a corresponding guide groove 13 (the fixed concave section 15 extend into six equally-spaced guide grooves 13 starting from the guide groove 13 at the top in this embodiment). The fixed concave sections 15 extend radially from the central axis O. The fixed concave sections 15 have smaller widths than those of the guide grooves 13, and they extend up to the insertion hole 10. Claw members 16 each as a hooking unit are fixed in the fixed concave sections 15 (as shown in Fig. 2). The claw members 16 are accommodated within the fixed concave sections 15 and their edge sections extend inside the periphery of the insertion hole 10.

Escape holes 17 are formed in the substrate 1 in the guide grooves 13. The escape holes 17 are provided at different distances from the central axis O in the adjoining guide grooves 13. In this embodiment, the escape hole 17 in the guide groove 13 in the top is located away from the central axis O. The escape hole 17 in the guide groove 13 adjoining that in the top is located close to the central axis O. As described above, the escape holes 17 are provided in adjoining guide grooves 13 at positions far from the adjacent guide groove 13 and at positions close to the central axis O alternately.

Each of the pressing members 2 is inserted into each of the guide grooves 13. As shown in Fig. 5A to Fig. 5D, the pressing member 2 can have four different structures. As shown in Fig. 5A, a first pressing member 21 has a slender form with the cross-sectional form having such a width and a thickness that the first pressing member 21 can freely move in the corresponding guide groove 13 (13A) along the longitudinal direction. An edge face of a tip 21a of the first pressing member 21 that faces toward the central axis 0 of the substrate 1 when inserted into the guide groove 13 is arc-shaped. Furthermore, a fixing hole 21b is formed in the first pressing member 21. A cam follower 25 (Refer to Fig. 1 and Fig. 2) as a driven unit for engaging in the rotational body 3 is inserted in the fixing hole 21b.

As shown in Fig. 5B, a second pressing member 22 has a slender form and also has a cross-sectional form with such a width and a thickness that allows free movement in the corresponding guide groove 13 (13B) in the longitudinal direction. An edge face of a tip 22a of the second pressing member 22 that faces toward the central axis O of the substrate 1 is arc-shaped. Furthermore, a fixing hole 22b is formed in the second pressing member 22. A cam follower 25 (Refer to Fig. 1 and Fig. 2) as a driven unit for engaging in the rotational body 3 is inserted in the fixing hole 22b.

As shown in Fig. 5C, a third pressing member 23 has a slender form and also has a cross-sectional form with such a width and a thickness that allows free movement in the corresponding guide groove 13 (13C) in the longitudinal direction. An edge face of a tip 23a of the third pressing member 23 that faces toward the central axis 0 of the substrate 1 is arc-shaped. Furthermore, a fixing hole 23b is formed in the third pressing member 23. A cam follower 25 (Refer to Fig. 1 and Fig. 2), as a driving unit, that engages in the rotational body 3 is inserted in the fixing hole 23b. Moreover, a step section 23c having a smaller thickness than the other portion of the third pressing member 23 is formed in a section near the tip 23a.

As shown in Fig. 5D, a fourth pressing member 24 has a slender form and also has a cross-sectional form with such a width and a thickness that allows free movement in the corresponding guide groove 13 (13D) in the longitudinal direction. An edge face of a tip 24a of the fourth pressing member 24 that faces toward the central axis O of the substrate 1 is arc-shaped. Furthermore, a fixing hole 24b is formed in the fourth pressing member 24. A cam follower 25 (Refer to Fig. 1 and Fig. 2), as a driving unit, that engages in the rotational body 3 is inserted in the fixing hole 24b. Moreover, a step section 24c having a smaller thickness than the other portion of the fourth pressing member 24 is formed in a section near the tip 24a.

The first pressing member 21 and the second pressing member 22 have the same configuration with a difference in the positions of the fixing holes 21b and 22b. In the first pressing member 21 the fixing hole 21b is closer to the tip 21a, while in the second pressing member 22 the fixing hole 22b is closer to the base end. The third pressing member 23 and the fourth pressing member 24 have the same configuration, with a difference in the positions of the fixing holes 23b and 24b. In the third pressing member 23 the fixing hole 23b is closer to the tip 23a, and in the fourth pressing member 24 the fixing hole 24b is closer to the base end. Positions of the fixing holes 21b, 22b, 23b, and 24b relate to the rotational body 3.

Movable claw sections 26 each as a holing unit are provided at the tips 23a, 24a of the third pressing member 23 and the fourth pressing member 24. As shown in Fig. 6, the movable claw sections 26 are provided in the step sections 23c and 24c of the third pressing member 23 and the fourth pressing member 24. Each of the movable claw sections 26 has a fixing section 26a and a movable section 26b. The fixing sections 26a are fixed to the step sections 23c and 24c, and the movable sections 26b are movably supported on the tips 23a and 24a. Furthermore, a compression spring 26c is provided between the fixing section 26a and the movable section 26b. The movable sections 26b are pushed by the compression spring 26c toward the tips 23a, 24a, and are supported by the fixing sections 26a in the state where the movable sections 26b extend each by a prespecified length from the tips 23a, 24a. Furthermore, edge faces of the fixing section 26a and the movable section 26b facing against the tips 23a, 24a respectively are machined to tapered faces.

As shown in Fig. 7, the rotational body 3 is plate-like having a circular external periphery with the central axis 0 at the center. The external shape of the rotational body 3 allows for insertion thereof into the accommodating concave section 11 provided in the substrate 1. Furthermore, the rotational body 3 has a circular insertion hole 30 around the central axis O. The insertion hole 30 has a larger diameter than that of the insertion hole 10 provided in the substrate 1. The rotational body 3 has an arm section 31 that extends in one direction (right direction in Fig. 7). The arm section 31 has a cam hole 31a. Furthermore, the rotational body 3 has a cam holes 32. Each cam hole 32 as a driven unit engages in each cam follower 25 of each pressing member 2. The cam holes 32 are provided at 18 positions corresponding to the pressing members 2 (21, 22, 23, 24) inserted into the guide grooves 13 (13A, 13B, 13C, and 13D) on the substrate 1

With such a configuration, as shown in Fig. 1 and Fig. 2, the pressing members 2 are inserted into the guide grooves 13 on the substrate 1. The first pressing members 21 are inserted into the guide grooves 13A provided at eight positions as shown in Fig. 4. The second pressing members 22 are inserted into the guide grooves 13B provided at six positions as shown in Fig. 4. The third pressing member 23 is inserted into the guide groove 13C provided at one position as shown in Fig. 4. The fourth pressing members 24 are inserted into the guide grooves 13D provided at three positions as shown in Fig. 4.

The accommodating concave section 11 provided in the substrate 1 accommodates therein the rotational body 3 as shown in Fig. 1 and Fig. 2. The rotational body 3 accommodated within the accommodating concave section 11 supports the pressing members 2 inserted into the guide grooves 13 from the front side. Furthermore, the cam followers 25 set on the pressing members 2 are inserted into the cam holes 32 on the rotational body 3. A plurality of support rollers 18 (provided at 5 positions shown in Fig. 1 in this embodiment) are provided along an external periphery of the accommodating concave section 11. These support rollers 18 align the rotational body 3 along the central axis O of the substrate 1 and also support the rotational body 3 so that the rotational body 3 can rotate within the accommodating concave section 11. Furthermore, pressing section 19 are provided in the substrate 1 for supporting the rotational body 3 accommodated within the accommodating concave section 11 from the front side. When the cam holes 32 are engaged with the cam followers 25, the rotational body 3 integrally engages with the pressing members 2 and can rotate around the central axis O

The fixing holes 21b, 22b, 23b, and 24b in the pressing members 2 are provided at positions that allow for engagement with the cam followers 25 and the cam holes 32 provided in the rotational body 3. The escape holes 17 in the guide grooves 13 are provided at positions that allow for insertions of screw sections (shown in Fig. 2) for setting the cam follower 25 on the pressing members 2 and also to prevent contact of the screw sections 25a with the substrate 1.

A push rod 6 is inserted into the concave grove 12 on the substrate 1. The push rod 6 can move in the vertical direction along the concave groove 12. A cam follower 6a is set in the substantially intermediate section of the push rod 6. The cam follower 6a is inserted into and engaged with a cam hole 31a provided in the arm section 31 of the rotational body 3. Furthermore, a compression spring 6b is provided between a lower edge of the push rod 6 and the base plate 4. The compression spring 6b pushes the push rod 6 upward (as shown in Fig. 1). An upper edge of the push rod 6 thrusts out from the upper side of the substrate 1.

With such a configuration, when the push rod 6 moves in the vertical direction, the arm section 31 moves in the vertical direction via engagement between the cam follower 6a and the cam hole 31a, so that the rotational body 3 rotates around the central axis O. Furthermore, when the rotational body 3 rotates, the pressing members 2 (21, 22, 23, 24) move along the guide grooves 13 on the substrate 1 via engagement between the cam hole 32 and the cam follower 25, so that the tips 21a, 22a, 23a, and 24a move back and forth against the central axis O.

A holding unit 7 is provided on the base plate 4. The holding unit 7 holds and positions a mounting body against the central shaft O. The holding unit 7 according to the present embodiment aligns a central axis line of the constant velocity joint as a mounting body with the central axis O. For the alignment, the holding unit 7 has an engagement groove 7a for engagement with a portion of a joint section of the constant velocity joint and a holding section 7b holding the joint section engaged in the engagement groove 7a with the engagement groove 7a and overriding the engagement groove 7a for fixing.

Actions of the ring compression device are described below.

Fig. 8 is a front view of a state in which a ring is mounted in a pressing member in the initial state; Fig. 9 is a side cross-sectional view of a state in which the ring is mounted; Fig. 10 is a side cross-sectional view of a state in which a mounting body is set inside the ring; Fig. 11 is a front view for explaining the operations of the ring compression device as a whole; Fig. 12 and Fig. 13 are front views of a state in which the ring is compressed.

At first, the device is set in an initial state. In the initial state, as shown in Fig. 1, the push rod 6 is raised upward by the compression spring 6b, and also the arm section 31 of the rotational body 3 engaged with the push rod 6 is upraised. Moreover, the pressing members 2 (21, 22, 23,24) are at positions where the tips 21a, 22a, 23a, and 24a are retracted from the central axis 0 because of a form of the cam holes 32 of the rotational body 3 in which the cam followers are engaged respectively as described below in detail. In other words, as shown in Fig. 8, the tips 21a, 22a of the first pressing member 21 and the second pressing member 22 are further retracted from the central axis O as compared to the tips 23a, 24a of the third pressing member 23 and the fourth pressing member 24. To describe in further detail, when the pressing members 2 are retracted, positions of the tips 23a and 24a of the third pressing members 23 and the fourth pressing member 24 each as particular pressing members are on a reference circle around the central axis O, and positions of the tips 21a, 22a of the first pressing member 21 and the second pressing member 22 as other pressing members are off outward from the reference circle. This reference circle corresponds to an external periphery of the ring R around the central axis O.

Then, the ring R is mounted on the device. The ring R is inserted into an area surrounded by the tips 21a, 22a, 23a, and 24a of the pressing members 2 (21, 22, 23, and 24) from the front side of the device. The ring R inserted as shown in Fig. 9 once retracts and overrides the movable sections 26b of the movable claw sections 26 provided in the third pressing member 23 and the fourth pressing member 24 and contact the claw members 16. Then movable section 26b is restored to the original form by the compression spring 26c, and the ring R is hooked at the tips 23a, 24a arranged in the circular form between the movable sections 26b and the claw members 16. As a result, the ring R is mounted at the positions of the tips 23a, 24a of the third pressing member 23 and the fourth pressing member 24.

When the ring R is set as described above, if the ring R has an external periphery close to a perfect circle, the ring R is positioned and hooked by the tips 23a, 24a of the third pressing member 23 and the fourth pressing member 24 at a position around the central axis O as a center. Sometimes the external periphery of the ring R may deform. In this device, positions of the tips 21a, 22a of the first pressing member 21 and the second pressing member 22 are off outward from the reference circle as described above. Therefore, a portion of the ring R deformed outward is compensated by the positions of the tips 21a, 22a of the first pressing member 21 and the second pressing member 22. As a result, even when the ring R is deformed, the ring R can be set without causing any trouble, so that the ring R can smoothly be set.

After the ring R is set, the mounting body D is set in the device in the initial state. The mounting body D is inserted into the ring R already set within an area surrounded by the tips 21a, 22a, 23a, and 24a of the pressing members 2 (21, 22, 23, 24) from a rear surface of the device. The mounting body D inserted into the ring R as shown in Fig. 10 is held by the holding unit 7. With this operation, positions on the mounting body D where the ring R is to be set are aligned to the position of ring R previously set in the device, thus the mounting body D being positioned.

Then the push rod 6 is pushed in as shown in Fig. 11. As a result, the arm section 31 of the rotational body 3 engaged with the push rod 6 is pushed down, and the rotational body 3 rotates counterclockwise around the central axis O in Fig. 11. In this state, the tips 21a, 22a, 23a, and 24a of the pressing members 2 (21; 22, 23, and 24) are at positions forwarded toward the central axis O because of a form of the cam holes 32 on the rotational body 3 with which the cam followers 25 engage. As a result, force is applied to the ring R by the tips 21a, 22a, 23a, and 24a from the outside thereof so that the ring R is compressed, thus the ring R being set on the mounting body D.

When the ring R is compressed, the pressing members 2 (21, 22, 23, 24) move as described below. Namely, When the rotational body 3 starts rotation from the default state, only the tips 21a, 22a of the first pressing member 21 and the second pressing member 22 at positions off outward from the reference circuit as shown in Fig. 12 move forward toward the central axis O because of forms of the cam holes 32 on the rotational body 3 in which the cam followers 25 of the first pressing member 21 and the second pressing member 22 are engaged. The first pressing member 21 and the second pressing member 22 move until the tips 21a, 22a reach the reference circuit on which the tips 23a, 24a of the third pressing member 23 and the fourth pressing member 24 are present.

When the tips 21a, 22a, 23a, and 24a of all pressing members 2 (21, 22, 23, 24) are positioned on the reference circuit, if the ring R is deformed when set as described above, the deformation of the ring R is corrected by the tips 21a, 22a of the first pressing member 21 and the second pressing member 22 having moved thereto to the perfect circle. -

When the rotational body 3 further rotates from the state shown in Fig. 12, the tips 21a, 22a, 23a, and 24a of all pressing members 2 (21, 22, 23, 24) move forward toward the central axis O because of the shapes of the cam holes 32 of the rotational body 3 in which the cam followers 25 are engaged as shown in Fig. 13. Because of this configuration, force is applied on the ring R by the tips 21a, 22a, 23a, and 24a by applying a force from the outside of the ring R, and the ring R is compressed. In this case, the force applied to the ring R is homogeneous around the central axis O, so that the uniformly compressed ring R is mounted on the mounting body D previously set and held around the central axis O.

In the state shown in Fig. 13 in which the ring R has been set on the mounting body D, the tips 21a, 22a, 23a, and 24a of all pressing members 2 (21, 22, 23, 24) are positioned along the external periphery of the ring R. Namely, the tips 21a, 22a, 23a, and 24a each having a curved form are positioned along the external periphery of the compressed ring R divided by the pressing members 2 (21, 22, 23, 24) .

Thus, the ring compression device has the single rotational body 3 that moves forward the tips 21a, 22a, 23a, and 24a of all pressing members 2 (21, 22, 23, 24) toward the central axis O, and the pressing members 2 (21, 22, 23, 24) are integrally engaged therein. Because of such a configuration, there is only one delivery system for delivering operations of the single rotational body 3 to the pressing members 2 (21, 22, 23, 24). As a result, the pressing members 2 can move uniformly, so that a uniform force can be applied to the ring R.

In the initial state of the device for setting the ring R onto the tips 21a, 22a, 23a, and 24a of all pressing members 2 (21, 22, 23, 24), the tips 23a, 24a of the third pressing member 23 and the fourth pressing member 24 are on the reference circle (external periphery of the ring R) around the central axis O, while the tips 21a, 22a of the first pressing member 21 and the second pressing member 22 are off outward from the reference circle. Moreover, a hooking unit including the claw member 16 and the movable claw section 26 is provided for the tips 23a, 24a of the third pressing member 23 and the fourth pressing member 24. Because of such a configuration, when the ring R is perfectly circular, the ring R can be supported by the hooking unit around the central axis O. When the ring R is deformed, the deformation is taken care of because of the positions of the tips 21a, 22a of the first pressing member 21 and the second pressing member 22, so that the ring R can firmly be supported by the hooking unit . As a result, the ring R can be'mounted easily without any deformation.

The driven unit including the cam followers 25 and the cam holes 32 for moving the pressing members 2 move the tips 21a, 22a of the first pressing member 21 and the second pressing member 22 because of the forms of the cam holes 32 up to positions on a reference circle. Because of such a configuration, when the ring R is deformed, the form of the ring R can be corrected to a perfect circle based on the reference circle.

Furthermore, by holding the mounting body D with the holding unit 7 provided on the base plate 4, the positions on the mounting body D at which the ring R is to be set can be aligned in relation to the position of the ring R previously set on the device.

Furthermore, the ring compression method based on operations of the ring compression device described above comprises the steps of hooking the ring R inside the tips 21a, 22a, 23a, and 24a of all pressing members 2 (21, 22, 23, 24); inserting and holding a mounting body D within the ring R; and applying force to the ring R with the tips 21a, 22a, 23a, and 24a moved forward from outside of the ring R. Because of this functional configuration, a clearance between the ring R and the mounting body D before the ring R is set on the mounting body D is accommodated, so that positioning to each other can accurately be carried out for holding. As a result, force to the ring R can be stabilized, and force toward a center of the mounting body D can be stabilized, so that the ring R can be set smoothly and easily on the mounting body D.

The ring compression method further includes the step of aligning positions of the tips 23a, 24a with the reference circle corresponding to the external periphery of the ring R around the central axis O and arranging the other tips 21a, 22a at positions off outward from the reference circle before the ring R is hooked. Because of such a configuration, when the ring R perfectly circular, the ring R can be supported at accurate positions around the central axis O by the tips 23a, 24a. When the ring R is deformed, the deformation is accommodated because of the positions of the tips 21a, 22a.

The ring compression method further includes the step of aligning positions of all tips 21a, 22a, 23a, and 24a to the reference circle in the step of moving forward the tips 21a, 22a, 23a, and 24a. As a result, when the ring R is in deformed state even before the mounting, the deformation can be eliminated with the form of ring R corrected to a perfect circle.

In the embodiment, the ring R is set along an external periphery of each opening of the boot D4 over the joint section D2 for the constant velocity as the mounting body D. Although not shown in the figure, when the ring R is set along an external periphery of each opening of the boot D4 over the other shaft D3 of the constant velocity joint, the configuration as described above may be employed, and in this case, it is required to elongate the tips 21a, 22a, 23a, and 24a of the pressing members 2 (21, 22, 23, 24) toward the central axis O and to align the ring R with the external periphery of each opening of the boot D4 over the other shaft D3. As a result, the holding unit 7 changes the position so that the external periphery of each opening of the boot D4 over the other axis D3 is positioned in an inner side from the tips 21a, 22a, 23a, and 24a of the pressing members 2 (21, 22, 23, 24).

### INDUSTRIAL APPLICABILITY

As described above, the ring compression device and ring compression method according to the present invention are useful for applying force to a ring from outside of the ring to mount the ring on a mounting body inside the bore of the ring, and is especially adapted to positioning the ring and the mounting body by applying a uniform force from an outer periphery of the ring.

## Claims

1. A ring compression device for applying force onto a ring to fix the ring on a mounting body, the device comprising:
a substrate (1) having a central axis (O);
a plurality of pressing members (2) radially provided on the substrate (1) and having tips pointing to the central axis of the substrate, the pressing members being freely movable back and forth in relation to the central axis on a prespecified plane;
a rotating body (3) rotatably provided on the substrate around the central axis; and
a driven unit (23, 25) configured to move the tip of each of the pressing members toward the central axis upon rotation of the rotating body and applying a force to the ring from the outside thereof with the tips of the pressing members, wherein the rotating body is engaged with each of the pressing members **characterized in that** the rotating body extends parallel to the plane and **in that**, in an initial state of the device, a tip of a specific pressing member of the pressing members is aligned to a reference circle of the central axis (O) constituting an external periphery of the ring, and tips of the pressing members other than the specific pressing member are provided in a position off outward of the reference circle;
the driven unit is configured to align the tips of all pressing members to the reference circle by moving the tips of the pressing members other than the specific pressing member forward until the tips of the pressing members other than the specific pressing member reach the reference circle and to move the tips of all pressing members together thereafter; and **in that** the ring compression device further comprises
a hooking unit (16, 26) configured to hook the ring (R), the hooking unit having a claw member abutting on an edge face on one side of the ring on the side of the substrate (1) and also having a movable claw member abutting on an edge face on the other side of the ring (R) on the tip side of the specific pressing member.

2. The ring compression device according to claim 1, further comprising:
a holding unit (7) configured to align and hold the mounting body in relation to the central axis.

3. A ring compression method of applying a force from the outside of a ring on the ring to fix the ring on a mounting body, comprising the steps of:
aligning a tip of a specific pressing member of a plurality of pressing members to a reference circle for a prespecified central axis constituting an external periphery of the ring, and providing tips of the pressing members other than the specific pressing member in a position off outward of the reference circle
hooking the ring in an inner position of the tip of the specific pressing member freely movable forward to the central axis;
inserting the mounting body into the ring and aligning and holding the mounting body to the central axis;
aligning, the tips of all pressing members to the reference circle, by moving each of the tips of the pressing members other than the specific pressing member forward; and
applying a force at the tip moved forward from the outside of the ring.

## Patentansprüche

1. Ringkompressionsvorrichtung, um Kraft auf einen Ring aufzubringen, um den Ring an einem Anbringkörper zu befestigen, wobei die Vorrichtung aufweist:
einen Träger (1) mit einer Mittelachse (O) ;
mehrere Presselemente (2), die radial an dem Träger (1) angeordnet sind und Spitzen aufweisen, die zur Mittelachse des Trägers zeigen, wobei die Presselemente bezüglich der Mittelachse in einer vorbestimmten Ebene frei vor und zurück bewegbar sind;
einen Drehkörper (3), der an dem Träger drehbar um die Mittelachse angeordnet ist; und
eine angetriebene Einheit (23, 25), die derart ausgelegt ist, dass sie die Spitze jedes der Presselemente bei Drehung des Drehkörpers hin zur Mittelachse bewegt und auf den Ring von dessen Außenseite her mit den Spitzen der Presselemente eine Kraft aufbringt, wobei der Drehkörper mit jedem der Presselemente in Eingriff ist, **dadurch gekennzeichnet, dass** sich der Drehkörper parallel zur Ebene erstreckt, und dadurch, dass in einem Anfangszustand der Vorrichtung eine Spitze eines spezifischen Presselements der Presselemente bündig an einem Referenzkreis der Mittelachse (O) angeordnet ist, welcher einen Außenumfang des Rings darstellt, und Spitzen der von dem spezifischen Presselement verschiedenen Presselemente in einer von dem Referenzkreis nach außen versetzten Position angeordnet sind;
die angetriebene Einheit derart ausgelegt ist, dass sie die Spitzen aller Presselemente dadurch bündig an dem Referenzkreis anordnet, dass sie die Spitzen der von dem spezifischen Presselement verschiedenen Presselemente vorbewegt, bis die Spitzen der von dem spezifischen Presselement verschiedenen Presselemente den Referenzkreis erreichen, und dass sie die Spitzen aller Presselemente danach zusammen bewegt; und dadurch, dass die Ringkompressionsvorrichtung ferner aufweist:
eine Festhakungs-Einheit (16, 26), die derart ausgelegt ist, dass sie den Ring (R) festhakt, wobei die Festhakungs-Einheit ein Klauenelement aufweist, das gegen eine Randfläche auf einer Seite des Rings auf der Seite des Trägers (1) anliegt, und ferner ein bewegbares Klauenelement aufweist, das gegen eine Randfläche auf der anderen Seite des Rings (R) auf Seiten der Spitze des spezifischen Presselements anliegt.

2. Ringkompressionsvorrichtung nach Anspruch 1, ferner mit:
einer Halteeinheit (7), die derart ausgelegt ist, dass sie den Anbringkörper in Relation zur Mittelachse ausrichtet und hält.

3. Ringkompressionsverfahren des Aufbringens einer Kraft von der Außenseite eines Ringes auf den Ring, um den Ring an einem Anbringkörper zu befestigen, das die folgenden Schritte aufweist:
bündiges Anordnen einer Spitze eines spezifischen Presselements von mehreren Presselementen an einem Referenzkreis für eine vorbestimmte Mittelachse (O), welcher einen Außenumfang des Rings darstellt, und Anordnen von Spitzen der von dem spezifischen Presselement verschiedenen Presselemente in einer von dem Referenzkreis nach außen versetzten Position;
Festhaken des Ringes in einer Innenposition der Spitze des spezifischen Presselements, welches frei vor zur Mittelachse bewegbar ist;
Einführen des Anbringkörpers in den Ring und Halten und Ausrichten des Anbringkörpers an der Mittelachse;
bündiges Anordnen der Spitzen aller Presselemente an dem Referenzkreis durch Bewegen aller Spitzen der von dem spezifischen Presselement verschiedenen Presselemente nach vorne; und
Aufbringen einer Kraft an der von der Außenseite des Rings vorbewegten Spitze.

## Revendications

1. Dispositif de compression d'anneau destiné à appliquer une force sur un anneau pour fixer l'anneau sur un corps de montage, le dispositif comprenant :
un substrat (1) ayant un axe central (O) ;
une pluralité d'éléments de pression (2) prévus de manière radiale sur le substrat (1) et ayant des pointes dirigées vers l'axe central du substrat, les éléments de pression étant librement mobile en va-et-vient par rapport à l'axe central sur un plan prédéterminé ;
un corps rotatif (3) prévu en rotation sur le substrat autour de l'axe central ; et
une unité entraînée (23, 25) configurée pour déplacer la pointe de chacun des éléments de pression vers l'axe central lors de la rotation du corps rotatif et appliquant une force à l'anneau à partir de son extérieur avec les pointes des éléments de pression, où le corps rotatif est engagé avec chacun des éléments de pression **caractérisé en ce que** le corps rotatif s'étend parallèlement au plan et **en ce que**, dans un état initial du dispositif, une pointe d'un élément de pression spécifique des éléments de pression est placée sur un cercle de référence de l'axe central (O) constituant une périphérie externe de l'anneau, et des pointes des éléments de pression autres que l'élément de pression spécifique sont prévues dans une position hors du cercle de référence ;
l'unité entraînée est configurée pour placer les pointes de tous les éléments de pression sur le cercle de référence en déplaçant les pointes des éléments de pression autres que l'élément de pression spécifique vers l'avant jusqu'à ce que les pointes des éléments de pression autres que l'élément de pression spécifique atteignent le cercle de référence et pour déplacer les pointes de tous les éléments de pression ensemble par la suite ; et **en ce que** le dispositif de compression d'anneau comprend en outre
une unité d'accrochage (16, 26) configurée pour accrocher l'anneau (R), l'unité d'accrochage ayant un élément de griffe venant en butée sur une face de bord sur un côté de l'anneau sur le côté du substrat (1) et ayant également un élément de griffe mobile venant en butée sur une face de bord sur l'autre côté de l'anneau (R) sur le côté de pointe de l'élément de pression spécifique.

2. Dispositif de compression d'anneau selon la revendication 1, comprenant en outre :
une unité de maintien (7) configurée pour aligner et maintenir le corps de montage par rapport à l'axe central.

3. Procédé de compression d'anneau destiné à appliquer une force à partir de l'extérieur d'un anneau sur l'anneau pour fixer ce dernier sur un corps de montage, comprenant les étapes qui consistent :
à placer une pointe d'un élément de pression spécifique d'une pluralité d'éléments de pression sur un cercle de référence pour un axe central prédéterminé constituant une périphérie externe de l'anneau et à fournir des pointes des éléments de pression autres que l'élément de pression spécifique dans une position hors du cercle de référence ;
à accrocher l'anneau dans une position intérieure de la pointe de l'élément de pression spécifique librement mobile vers l'avant par rapport à l'axe central ;
à insérer le corps de montage dans l'anneau et à aligner et à maintenir le corps de montage par rapport à l'axe central ;
à placer, les pointes de tous les éléments de pression sur le cercle de référence, en déplaçant chacune des pointes des éléments de pression autres que l'élément de pression spécifique vers l'avant ; et
à appliquer une force au niveau de la pointe déplacée vers l'avant à partir de l'extérieur de l'anneau.
